# EUROPEAN PATENT SPECIFICATION

(11) **EP 0 542 664 B1**
(45) Date of publication and mention of the grant of the patent: **21.07.1999**
(21) Application number: 92500148.9
(22) Date of filing: 12.11.1992
(51) Int. Cl.: G06F 19/00, G07F 17/32, A63F 3/06

(54) **Electronic system for the controlled play of bingo and machines usable with the system**
Elektronisches System für ein gesteuertes Bingospiel und dabei verwendbare Maschinen
Système électronique pour jeu de lots contrôlé et machines utilisables avec ce système

(30) Priority: 14.11.1991 ES 9102535
(43) Date of publication of application: 19.05.1993
(73) Proprietor: MATERIAL AUXILIAR DE JUEGO, S.A., E-28010 Madrid (ES)
(72) Inventor: Menéndez de Luarca, Juan, E-28007 Madrid (ES)
(74) Representative: Ibanez, José Francisco

(56) References cited:
- EP-A- 0 449 230
- GB-A- 2 147 773
- GB-A- 2 151 054
- GB-A- 2 194 369
- GB-A- 2 197 971
- US-A- 4 494 197
- US-A- 5 088 737

## Description

The present invention refers to an electronic system for the controlled play and prosecution of a game of chance, especially the so-called bingo, as well as the machines usable with said system.

As it is known, the game of bingo consists of reaching the coincidence between a group of numbers determined or played, normally represented on a card, and the numbers which are extracted at random, generally by means of numbered balls placed in a drum. The prize is obtained when the coincidence of numbers completes a line (line prize) or the whole card (bingo prize).

Mechanisms and machines which help the playing of bingo, for example extracting the balls or displaying the numbers which are being extracted, exist in the market and have been described.

In GB-A-2 180 460 and FR-A-2 617 730 of applicant have been described machines for playing bingo which comprise a central processing unit (CPU), a control keyboard, one or more screens, memory supports, warning signals of prizes and switches for automatic or manual operation, according to whether the playing machines or terminals are connected or not to a control machine for the different terminals. These machines for playing bingo have provided great advantage compared to the machines known until then, which were limited to giving aidance or information on some specific aspects of the progress of a game.

However, further investigation and experience accumulated during the working of these machines, have revealed some drawbacks of technical and practical nature in the operation of such machines, as well as some functions which would also be desirable to be carried out automatically.

Such drawbacks and desirable additional functions are expressed in the following paragraphs, which also constitute a definition of the objectives of the invention.

A first case of a potential area for expansion of the use of the known machines or terminals, is constituted by the fact that bingo is a game that, apart from being played in the traditional and specific bingo halls, could also be played in temporary sites or places which are normally dedicated to other games or forms of entertainment, such as casinos, boats, hotels, clubs and others. In order to cover this field of utilization, the game machines or terminals must adapt to new criteria of space, dimensions, speed of play and replace the absence of cards with printed numbers, keeping in mind the greater mobility and diversity of the players, as well as the eventual absence of numbered balls and drums to generate the numbers extracted at random.

Moreover, although bingo is a wide-spread game internationally, there are peculiarities in the rules in each country and even in each game hall. Also, in spite of being a game in which visual observation is important, written and spoken information is equally important. For the aforementioned reasons it would be desirable for the machines or terminals to be capable of adapting to different rules of the game, and of providing information and communication in several languages, which were able to be selected at player's will.

The eventual presence of players who are more interested in the final obtention of the prize than in prosecuting the game which eventually leads to obtaining said prize, must also be taken into account. Not only would the automatic operation of the game machine or terminal be interesting for these players, but also the fact that the machine could simultaneously provide another type of entertainment during the progress of the game.

Other functions which would be desirable for these machines correspond to legal or statutory matters. For example, the number of cards to be played per person or machine, or the economic value of these cards or the prize may be limited. Also, the aspects of the guarantee of the random nature or non-manipulation of the game and its prizes are important. Therefore, it would be desirable to have a system and machines which automatically provides adaptation of the game to the statutory requirements and instantaneous information on the quantity and allotment of prizes.

Finally, the hall itself or the organization responsible for the game, could see their work of internal control and with regard to the authorities greatly eased, through a system which maintains and provides, in a visual or printed form, the historical, statistical, economic and administrative records of each game or series of games.

The embodiment of such desirable functions and operations constitutes, as was said earlier, the objectives of the invention.

The invention relates to an electronic system for the controlled play of bingo as set out in claim 1.

In a particular embodiment, the system comprises an automatic electronic random number generator as a substitute for the drum and reader of the numbered balls.

In another embodiment a control machine for playing the game of bingo and usable with the system of the invention comprises:
- a CPU
- memory supports, which contain at least the data pertaining to the statutory or voluntary regulations of the game, the current and historical data of each game or series of games, and a logic programme for the operation and control of the machine,
- communication plates,
- a control keyboard
- a screen for the display of data and information,
- an independent emergency power supply device,
all these elements being operatively connected upon dependence of a logic operation programme stored in the memory supports, which is responsible for the organised output and input of data and signals through a communications controller, so that the machine controls the operation of:
- a drum for the random extraction of numbered balls,
- an automatic electronic random number generator,
- a number reading device for the balls extracted from he drum,
- a panel for the display of the numbers extracted and read,
- one or more printers, capable of printing historical or current data and messages of the game's progress, and
- one or more game terminals.

Additionally, in accordance with another embodiment of the invention, a bingo game terminal machine, usable in particular with the system and dependent on the aforementioned control machine comprises:
- a CPU,
- memory supports which contain at least the data pertaining to the statutory or voluntary regulations of the game, the current and historical data of each game, and a logic programme for the operation and control of the machine,
- one or more screens of CRT or LCD type, for the display of data, images or messages,
- a control keyboard,
- an independent emergency power supply device,
- visual display signal means, different from the screen, to transmit advices and alarms,
- acoustic means for the transmission of messages,
- voice synthesizer means to transmit messages through said acoustic means,
- means for the translation of the acoustic and visual messages into several languages, which can be selected at will, and
- means for connection to a public or private audiovisual communication system,
all these elements being operatively connected upon dependence of a logic operation programme stored in the memory supports, and through a communication controller for the organised exchange of data and signals with a control machine.

In a particular embodiment of the invention, the terminal machine comprises a device for the collection of money or equivalent value, which controls the starting-up and operation time of the game terminal.

The system and machines of the invention which provide the aforementioned functions, as well as other advantages, will be better understood from the description which follows of (non-restrictive) examples of basic forms of setting the system, and of the embodiment of the machines, illustrated on the sheets of drawings attached, in which:

Figure 1 is a diagram of the system of the invention.

Figure 2 is a schematic view of an example of a game terminal machine.

Figure 3 is a block diagram of an example of a CPU for a game terminal.

Figures 4 and 5 are schematic views of examples of image displays to be obtained on the game terminal screen during the progress of the game.

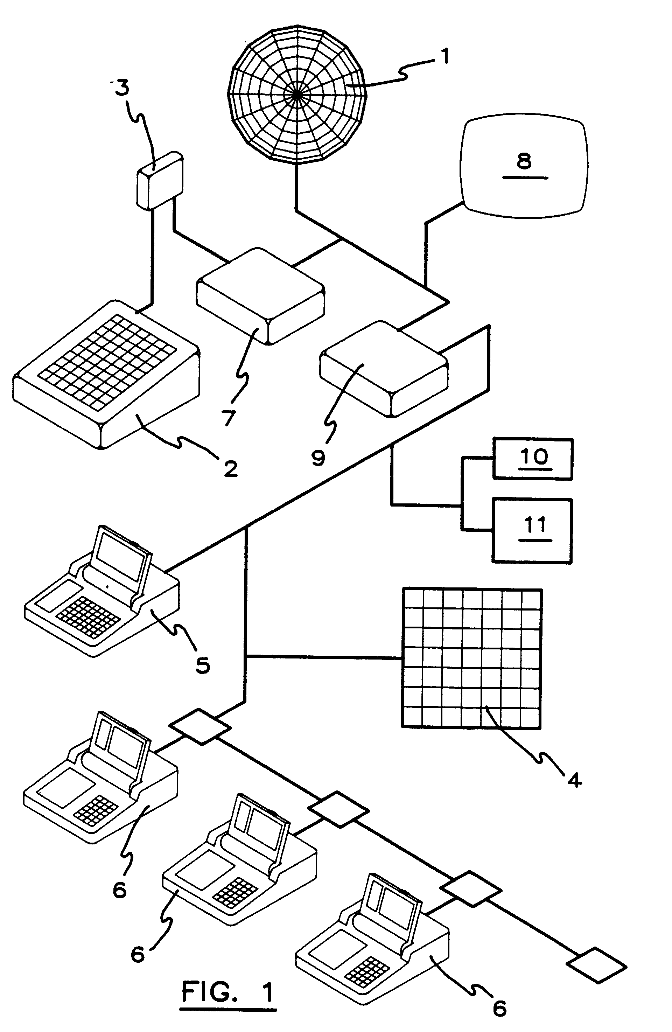

The diagram shown in Figure 1 contains the basic elements which make up a system according to the invention, whose elements and respective functions are explained below.

According to the playing action of bingo, a series of numbers are determined at random, which is traditionally done by means of a drum (1) from which numbered balls are extracted at random; these numbers are read (called out) by a speaker who marks them on a keyboard (2); a signal is sent from the keyboard, through an interface (3), to a main panel (4), for information of the hall, to a control machine (5), and to various game terminals (6).

For greater precision and guarantee of the game, in connection with drum (1) an electronic reader (7) of the balls or numbers can be included in the system, which sends the corresponding signal to the aforementioned devices (2,3,4,5,6).

The operation of the drum (1) and reader (7) may, in some cases, for example, in casinos, be substituted by an automatic electronic random number generator (8), programmed and manufactured with the required guarantees, which transmits the corresponding signals to devices (2,3,4,5,6) as in the previous case, or only to the control machine (5) and the terminals (6), in the cases of a rapid, automatic and silent bingo game.

A communications controller is responsible for the activation, verification and administration of the system communications network. This controller has its own microprocessor, control and diagnosis routines.

The control machine (5) is responsible for the control of the system, and is made up of its corresponding CPU, memory supports, communication plates, display screen and keyboard.

Depending on this control machine, two printers, (10) and (11) for example, are integrated into the system. One printer (10) is responsible for the printed record of all incidents of the games; that is, date, time, cards played and their identification, quantity of money collected, value of the prize, numbers extracted or generated, prize-winning cards, claims or other events which may be of interest. The other printer (11), may be responsible for editing and printing a certificate or prize coupon to be exchanged, which is given to the winner.

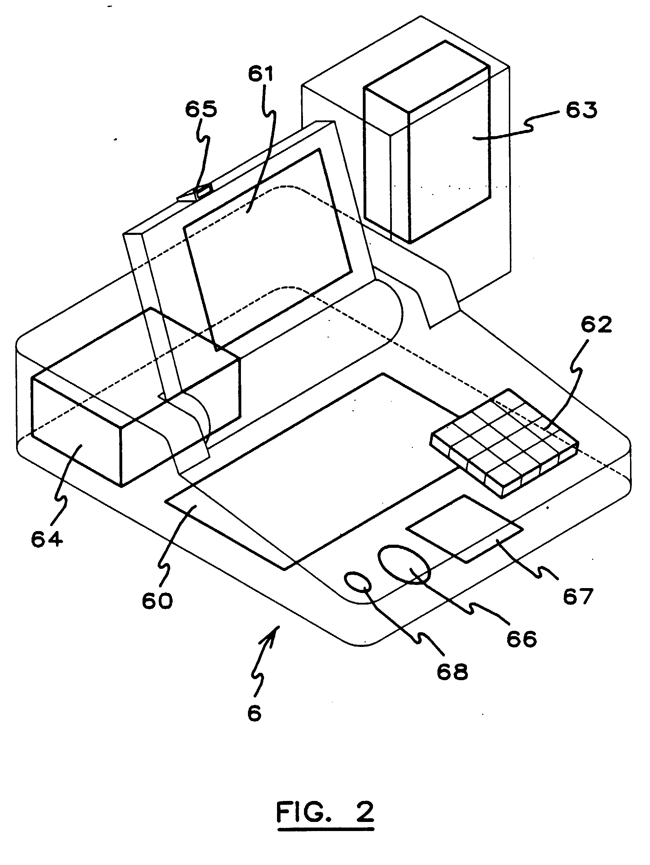

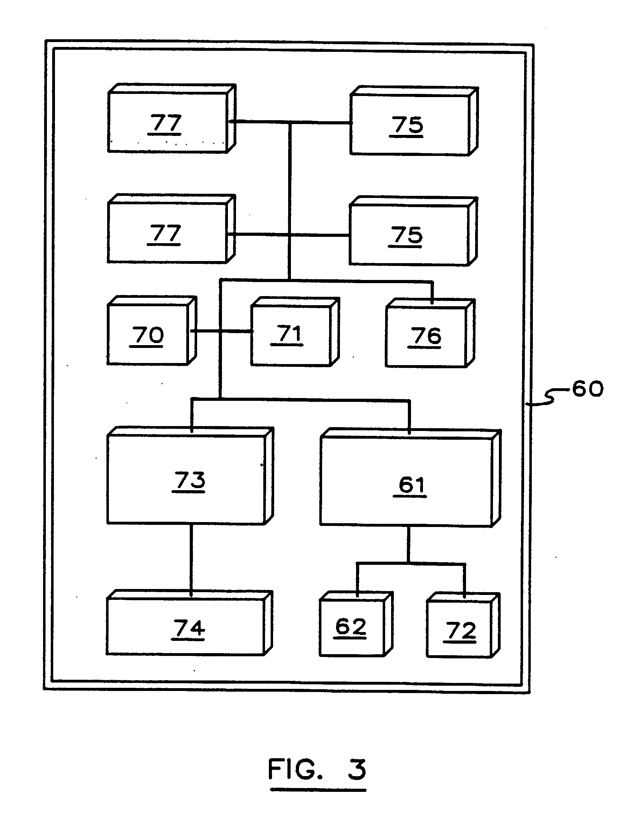

The game terminal (6) is diagramatically represented in more detail in Figure 2 and comprises, for example, the following elements:
- A CPU (60), which will be described later in relation to Figure 3.
- A screen (61), which may be of different types according to needs; for example, the classical CRT or the more modern LCD. Two screens may even be combined, one connected to the system communications which informs about the game progress, and the other to an internal communications system (eg: entertainment, publicity), or an external one (eg: TV station) which provides another type of information or entertainment for the player. This duality of communications would also be possible on a single screen in which, at user's will, the corresponding windows were opened to give information on the game progress without interrupting the entertainment programme selected.
- A control keyboard (62), composed, for example, of the keys corresponding to the ten digits and function keys which permit the control of the operations of the game terminal (6).
- A money collector device or system for the collection of money (63) may eventually be installed, which would function with coins, special counters or automatic debit devices. The payment by coins or special counters will be made by introduction of such coins or counters in the money collector (63) which is annexed to the terminals. These counters or coins may stand for the value of one or more game cards, or else a certain amount of money which is automatically and internally administered by the terminal (6) in the form of game credits. The automatic debit devices are based, for example, on the recording of a definite number of cards on a magnetic tape which is read using a special reader, placed in a terminal (6) or in the money collector (63).
- An independent emergency power supply device ( 64 ), made up from a special electronic circuit which comprises a battery of sufficient capacity to supply terminal (6) with the power which ensures its normal operation when faced with a power cut.
- A pilot light (65) placed on the upper part of the terminal (6), and a loud speaker (66) with the objective of announcing prizes and possible typing errors.
- A connection circuit and auxiliary plug (67), by which the user may, for example, select the language of play, or an entertainment programme, or connect earphones which allow the prosecution of the game progress and instructions in the language selected, or the reception of the entertainment programme selected and which is displayed on the screen (61).
- A switch (68) with which the player may select the operation of the terminal (6), between manual mode, which requires typing in the data of each game, or automatic mode, in which the user limits himself to watching the incidents of the game and possibly the entertainment selected on the screen (61).

The CPU, or central processing unit (60), is an essential organ in the game terminal (6) and houses all the logic means necessary for its operation. It is basically formed from, as represented in the diagram of Figure 3, two microprocessors (70, 71), one devoted to the control of the game and the other to attend the input and output of data and signals for the screen or screens (61), the communications via an interface (72), a keyboard (62), a voice synthesizer (73), based on, for example, MCP techniques and which has pre-recorded messages in different languages on an EPROM type memory (74). A sounds generator (73) also undertakes to emit acoustic messages regarding typing errors, prize-winning signals, or others.

The operation and communication programmes, the messages in several as well as the data regarding the numerical composition of the series of cards, or the quantity of prizes, the numbers which are extracted or generated, and other statistical data or general information are recorded on RAM, ROM, and EPROM type memories (75,76,77).

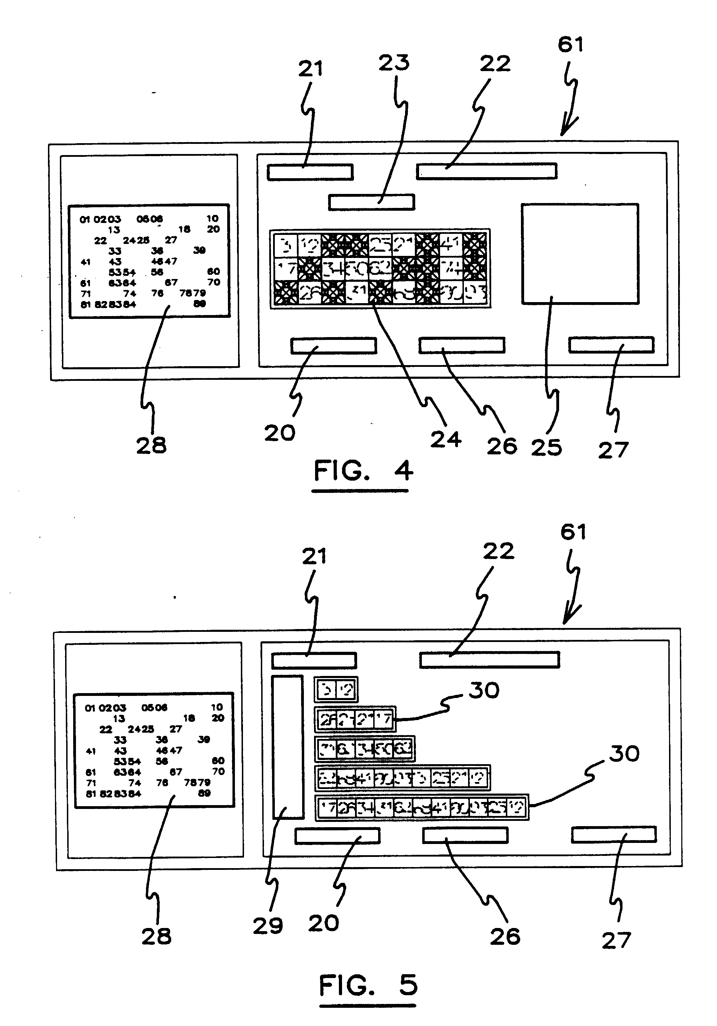

During the game, the screen (61) of the game terminal can display information which is represented by way of example in Figures 4 and 5. Thus, in Figure 4, for example, the number of cards which are being played will appear in area (20), in (21) the number of cards or games available, in (22) the prize (line or bingo) and the amount of money which is being played, in (23) the identification of the card which is closest to winning a prize, in (24) the same card with marking of the numbers still left to coincide, in (25) information on the state of the other cards which are possibly being played, in (26) the number of balls extracted, in (27) the three, four or more most recent numbers extracted, and in (28) the panel of all the numbers which have been extracted. The example of the display screen represented in Figure 5 is basically the same as the previous one; it only varies in that in area (29) the number of identification of the card closest to winning and in (30) the numbers left to coincide on said card are displayed.

The information panel (4) for the hall is a peripheral of the control machine (5), and displays the information of the game, for example regarding to cards in play, amount of line prize, amount of bingo prize, accumulated prize (if there were one), last number extracted, last three numbers extracted and other information. Although part of this information already appears on the individual screens of the different terminals (6), as was described earlier, it has the objective of informing all those present in the hall, whether they are players or not, for a greater warranty of the game.

From these elements and machines of the system, the operation during a game of bingo will be as described below, with special reference to an automatic operating mode of the terminal (6), suitable for a casino, in which the differences with a typical operating mode in a traditional bingo hall under manual operation of the terminal (6) can be appreciated.

The player is located in front of a game terminal (6). On the screen (61) the player is told to introduce, by means of keyboard (62), the identification of the cards he is going to play during the game. The player keys in the number or the identification of the cards he is going to play, and the terminal indicates the corresponding fee, if the player has not previously acquired the cards. The terminal displays on the screen (61) the number of credits, coins or counters which the player must introduce into the money collector (63). The game terminal verifies that it has received the correct amount, and gets into standby situation, clearly advising the player of this fact. The central machine (5) receives the number of cards which each player has selected from each terminal (6), and assigns said cards to each terminal (6). The system also accepts that the player may designate specific cards which he wishes to play, and therefore, if these cards are not already taken, they will be assigned to him. Once the cards are assigned to the terminals (6) in play, the assignation of cards is closed, the amounts of the prizes calculated, and this information is displayed on the screens (61) and/or on the hall information panel (4).

The next step consists of the random number generation, either by means of the classical system with real balls (1,7), or by the electronic number generator (8). The control machine (5) receives the signals from the numbers extracted or generated and assigns them to the cards of the terminals (6), displaying on its individual screen the development of the game in such a way that the system's operator knows the progress of each game perfectly. At the same time, it transmits the numbers generated or extracted through the communications controller (9) to all terminals (6), and these terminals, like the control machine (5), assign them to the cards played, showing on each screen (61) the state of closeness to winning a prize. When a line or card is completed, the game terminal (6) corresponding to the winning card detects it and indicates which card among those played is the winning one on its screen (61), and activates the visual (65) or acoustic (66) signals. Simultaneously, the control machine (5) has also detected the winning card and displays on its screen said card and the terminal (6) which possesses it, and prints, via the printer (10,11), as a record or certificate, all the data of the prize and the game. The prizes are checked, with the prize-winning card being able to be displayed on the panel (4), as well as on the individual screens (61), so that the players can verify that it is correct. Once the prize is checked, if it is a bingo prize the game is finished and the preparations for the following game are begun.

## Claims

1. Electronic system for the controlled play of bingo, comprising:
- a panel (4) for the display of the numbers extracted and read,
- a control machine (5) provided at least with a CPU, communication plates, control keyboard and screen for the display of data and messages,
- memory supports, located in said control machine (5), which contain at least the data relating to the statutory or voluntary regulations of the game, the current and historical data of each game or series of games, and a logic programme for the operation and control of the elements of the system,
- one or more printers (10,11), dependent in their operation on the control machine (5), capable of printing historical or current data and messages of the progress of the games,
- one or more game terminal machines (6), provided at least with a CPU (60), one or more screens (61) for the display of data, images or messages, communication plates, a control keyboard (62), money collector devices (63), for controlling their starting and operation, visual signal means (65), different from the screen (61), for the transmission of alarms or advices, acoustic means (66,67) for the transmission of messages, voice synthesizer means (73), for the transmission of messages via said acoustic means (66,67),
- memory supports (74,75,76,77), located in said game terminal machine (6), which contain at least the data pertaining to the statutory or voluntary regulations of the game, the current and historical data of each game, and a logic programme for the operation and control of the machine (6),
- a system communications controller (9), provided with its own microprocessor, and
- an independent emergency power supply device (64) said system being characterized in that it also comprises
- a drum (1) for the random extraction of numbered balls,
- a number reading device (7) for the balls extracted, and means for the translation (74) of the acoustic and visual messages into several languages, which can be selected at will, and connection means (67) to a public or private audiovisual communication system.

2. A system, according to claim 1, characterised by comprising an automatic electronic random number generator (8), as a substitute for the drum (1) and reader (7) of the numbered balls.

3. The system of claim 1 wherein the control machine comprises:
- a CPU,
- memory supports, which contain at least the data pertaining to the statutory or voluntary regulations of the game, the current and historical data of each game or series of games, and a logic programme for the operation and control of the machine,
- communication plates,
- a control keyboard,
- a screen for the display of data and information,
- an independent emergency power supply device, all these elements being operatively connected dependent on the logic operation programme stored in the memory supports, and which is responsible for the organised output and input of data and signals through a communications controller (9), so that the machine controls the operation of:
- a drum (1) for the random extraction of numbered balls,
- an automatic electronic random number generator (8),
- a number reading device (7) for the balls extracted from the drum (1),
- a panel (4) for the display of the numbers extracted and read,
- one or more printers (10,11), capable of printing historical or current data and messages of the game's progress, and,
- one or more game terminals (6).

4. The system of claim 1, wherein each terminal machine comprises : a terminal machine for playing the game of bingo, usable with the system as disclosed by claims 1 and 2, and dependent on the machine of claim 3, characterised by comprising:
- a CPU (60),
- memory supports (74,75,76,77), which contain at least the data pertaining to the statutory or voluntary regulations of the game, the current and historical data of each game, and a logic programme for the operation and control of the machine,
- one or more screens (61), of CRT or LCD type, for the display of data, images or messages,
- a control keyboard (62),
- an independent emergency power supply device (64),
- visual signal means (65), different from the screen (61), to transmit advices and alarms,
- acoustic means (66), for the transmission of messages,
- voice synthesizer means (73), to transmit messages through said acoustic means (66),
- means (74) for the translation of the acoustic and visual messages into several languages, which can be selected at will, and,
- connection means (67) to a public or private audiovisual communication system,
all these elements being operatively connected dependent on the logic operation programme stored in the memory supports (75, 76, 77) and through a communications controller (9), for the organised exchange of data and signals with a control machine (5).

5. The system according to claim 4, wherein the terminal machine further comprises a money collector device (63) which controls the starting-up and operation time of the game terminal (6).

## Patentansprüche

1. Elektronisches System für das gesteuerte Bingospiel, enthaltend:
- Tafel (4) für die Anzeige der gezogenen und gelesenen Nummern,
- eine Steuermaschine (5), die mit mindestens einer CPU, Kommunikationsplatinen, einer Steuertastatur und einem Bildschirm für die Anzeige von Daten und Mitteilungen versehen ist,
- Speichermittel, die sich in der genannten Steuermaschine (5) befinden, welche mindestens die Daten, welche sich auf die offiziellen oder freiwilligen Spielregeln beziehen, die laufenden und historischen Daten jedes Spiels oder Serien von Spielen und ein logisches Programm für den Betrieb und die Steuerung der Elemente des Systems enthalten,
- einen oder mehrere Drucker (10, 11), dessen oder deren Betrieb von der Steuermaschine (5) abhängig ist, mit der Fähigkeit, die historischen oder laufenden Daten und Mitteilungen beim Fortschritt des Spieles aufzuzeichnen,
- eine oder mehrere Spielterminalmaschinen (6), welche versehen sind mit mindestens einer CPU (60), einen oder mehrere Bildschirme (61) für die Anzeige von Daten, Bildern oder Mitteilungen, Kommunikationsplatinen, einer Steuertastatur (62), Geldsammelvorrichtungen (63), für die Steuerung ihres Starts und Betriebs, visuelle Signalmittel (65), die sich vom Bildschirm (61) unterscheiden, für die Übertragung von Alarmen oder Ratschlägen, akustische Mittel (66, 67) für die Übertragung von Mitteilungen, ein Sprachsynthesizermittel (73) für die Übertragung von Mitteilungen über die genannten akustischen Mittel (66, 67),
- Speichermittel (74, 75, 76, 77), welche sich in der genannten Spielterminalmaschine (6) befinden, welche mindestens die Daten enthalten, welche zu den offiziellen oder freiwilligen Spielregeln gehören, die laufenden oder historischen Daten jedes Spiels, und ein logisches Programm für den Betrieb und die Steuerung der Maschine (6),
- einen Systemkommunikationskontroller (9), welcher mit seinem eigenen Mikroprozessor versehen ist,
- eine unabhängige Notstromversorgungsvorrichtung (64),
wobei das genannte System dadurch gekennzeichnet ist, dass es ebenfalls
- eine Trommel (1) für die zufällige Ziehung von numerierten Bällen,
- ein Zahlenlesegerät (7) für die gezogenen Bälle und
- Mittel für die Übersetzung (74) der akustischen und visuellen Mitteilungen in verschiedene Sprachen, welche nach Wunsch ausgewählt werden, und Verbindungsmittel (67) zu einem öffentlichen oder privaten audiovisuellen Kommunikationssystem enthält.

2. System gemäss Anspruch 1, dadurch gekennzeichnet, dass es einen automatischen, elektronischen Zufallsgenerator (8) für die Nummern enthält, als Ersatz für die Trommel (1) und den Leser (7) für die numerierten Bälle.

3. Das System gemäss Anspruch 1, worin die Steuermaschine enthält:
- eine CPU
- Speichermittel, welche mindestens die Daten, welche zu den offiziellen oder freiwilligen Spielregen gehören, die laufenden und historischen Daten jedes Spiels oder Serien von Spielen und ein logisches Programm für den Betrieb und die Steuerung der Spiele enthalten,
- Kommunikationsplatinen,
- eine Steuertastatur,
- einen Bildschirm für die Anzeige von Daten und Informationen, und
- eine unabhängige Notstromversorgungsvorrichtung,
wobei alle diese Elemente operativ verknüpft sind, in Abhängigkeit des logischen Betriebsprogramms, welches auf den Speicherunterstützungen gespeichert ist, und welches für die organisierte Eingabe und Ausgabe von Daten und Signalen durch einen Kommunikationskontroller (9) verantwortlich ist, derart, dass die Maschine die Operation steuert von :
- einer Trommel (1) für das zufällige Ziehen von numerierten Bällen,
- einem automatischen elektronischen Zufallsgenerator für Nummern (8),
- einem Nummernlesegerät (7) für die aus der Trommel (1) gezogenen Bälle,
- einer Anzeigetafel (4) für die gelesenen und gezogenen Zahlen,
- eines oder mehrerer Drucker (10, 11), die fähig sind, historische oder laufende Daten und Mitteilungen des Spielfortschrittes auszudrucken, und
- eines oder mehrerer Spielterminals (6).

4. System gemäss Anspruch 1, worin jede Terminalmaschine enthält:
- eine CPU (60),
- Speichermittel (74, 75, 76, 77), welche mindestens die Daten enthalten, welche zu den offiziellen oder freiwilligen Spielregeln gehören, die laufenden und historischen Daten jedes Spiels und ein logisches Programm für den Betrieb und die Steuerung der Maschine,
- einen oder mehrere Bildschirme (61) des CRT- oder des LCD-Typs für die Anzeige von Daten, Bildern oder Mitteilungen,
- eine Steuertastatur (62),
- eine unabhängige Notstromversorgungsvorrichtung (64),
- visuelle Signalmittel (65), welche vom Bildschirm (61) verschieden sind, um Ratschläge und Alarme zu übertragen,
- akustische Mittel (66) für die Übertragung von Mitteilungen,
- Synthesizermittel (73) zur Übertragung von Mitteilungen durch akustische Mittel (66),
- Mittel (74) für die Übersetzung der akustischen und visuellen Mitteilungen in verschiedene Sprachen, welche wunschgemäss ausgewählt werden können,
- Verbindungsmittel (67) zu einem öffentlichen oder privaten audiovisuellen Kommunikationssystem, wobei alle diese Elemente operativ verbunden sind, in Abhängigkeit des logischen Betriebsprogrammes, welches in den Speicherunterstützungen (75, 76, 77) gespeichert ist und durch einen Kommunikationskontroller (9) für den organisierten Austausch von Datensignalen mit einer Steuermaschine (5).

5. System gemäss Anspruch 4, worin die Terminalmaschine weiter eine Geldsammelvorrichtung (63) enthält, welche die Aufstart- und Betriebszeit des Spielterminals (6) steuert.

## Revendications

1. Système électronique servant à jouer au bingo avec une commande, comprenant :
- un panneau (4) pour l'affichage des numéros tirés et lus,
- un dispositif de commande (5) comprenant au moins une unité centrale d'ordinateur, des cartes de communications, un clavier de commande et un écran pour l'affichage de données et de messages,
- des mémoires situées dans le dispositif de commande (5) et qui contiennent au moins les données relatives aux règles légales ou volontaires du jeu, les données actuelles et les données historiques de chaque jeu ou série de jeux, et un logiciel pour le fonctionnement et la commande des éléments du système,
- une ou plusieurs imprimantes (10, 11) dont le fonctionnement est tributaire du dispositif de commande (5), qui sont en mesure d'imprimer des données historiques ou actuelles et des messages concernant le déroulement des jeux,
- une ou plusieurs consoles de jeu (6), équipées d'au moins une unité centrale (60), un ou plusieurs écrans (61) pour l'affichage des données, des images ou des messages, de cartes de communications, d'un clavier de commande (62), de monnayeurs (63) servant à commander leur démarrage et leur fonctionnement, un moyen de signalisation visuelle (65) différent de l'écran (61), pour la délivrance d'alarmes ou de conseils, des moyens acoustiques (66, 67) pour délivrer des messages, un synthétiseur vocal (73) pour délivrer des messages en passant par les moyens acoustiques (66, 67),
- des mémoires (74, 75, 76, 77) situées dans la console de jeu (6) et qui contiennent au moins les données relatives aux règles légales ou volontaires du jeu, les données actuelles et les données historiques du jeu ou de chaque jeu, et un logiciel pour le fonctionnement et la commande de la console (6),
- une commande (9) des communications du système, équipée de son propre microprocesseur,
- une alimentation de secours indépendante (64),
caractérisé en ce qu'il comprend aussi
- un tambour (1) servant au prélèvement aléatoire de boules numérotées,
- un dispositif (7) de lecture de numéros pour les boules prélevées, et
- un système de traduction (74) des messages sonores et visuels en plusieurs langues qui peuvent être choisies à volonté, et un dispositif de branchement (67) à un système public ou privé de communications audiovisuelles.

2. Système selon la première revendication, caractérisé en ce qu'il comprend un générateur électronique automatique aléatoire (8) de numéros, qui remplace le tambour (1) et le lecteur (7) de boules numérotées.

3. Système selon la première revendication, caractérisé en ce que le dispositif de commande comprend :
- une unité centrale,
- des mémoires qui contiennent au moins les données relatives aux règles légales ou volontaires du jeu, les données actuelles et les données historiques de chaque jeu ou série de jeux, et un logiciel pour le fonctionnement et la commande du dispositif,
- des cartes de communications,
- un clavier de commande,
- un écran pour l'affichage de données et d'informations,
- une alimentation de secours indépendante, tous ces éléments étant reliés, sur le plan du fonctionnement, en fonction du logiciel enregistré dans les mémoires, et qui est responsable de l'entrée et de la sortie organisées de données et de signaux par l'intermédiaire d'une commande de communications (9), de telle sorte que le dispositif commande le fonctionnement des organes suivants :
- un tambour (1) pour le prélèvement aléatoire de boules numérotées,
- un générateur électronique automatique (8) de numéros aléatoires,
- un dispositif (7) de lecture de numéros pour les boules prélevées dans le tambour (1),
- un panneau d'affichage (4) des numéros prélevés et lus,
- une ou plusieurs imprimantes (10, 11) capables d'imprimer des données historiques ou actuelles et des messages relatifs à l'avancement du jeu, et
- une ou plusieurs consoles de jeu (6).

4. Système selon la première revendication, caractérisé en ce que chaque console comprend :
- une unité centrale (60),
- des mémoires (74, 75, 76, 77) qui contiennent au moins les données relatives aux règles légales ou volontaires du jeu, les données actuelles et les données historiques de chaque jeu, et un logiciel pour le fonctionnement et la commande du système,
- un ou plusieurs écrans (61), du type à tube cathodique ou à cristaux liquides, pour l'affichage de données, d'images ou de messages,
- un clavier de commande (62),
- une alimentation de secours indépendante (64),
- un système d'émission de signaux visuels (65), différent de l'écran (61), pour la délivrance de conseils et d'alarmes,
- un dispositif acoustique (66) pour la délivrance de messages,
- un synthétiseur vocal (73) pour délivrer des messages par le dispositif acoustique (66),
- un système de traduction (74) des messages sonores et visuels en plusieurs langues qui peuvent être choisies à volonté, et
- un dispositif de branchement (67) à un système public ou privé de communications audiovisuelles,
tous ces éléments étant reliés, pour le fonctionnement, en fonction du logiciel correspondant enregistré dans les mémoires (75, 76, 77) et par l'intermédiaire d'une commande de communications (9), pour l'échange organisé de données et de signaux au moyen d'un dispositif de commande (5).

5. Système selon la revendication 4, caractérisé en ce que la console (6) comprend en outre un monnayeur (63) qui commande sa mise en marche et sa durée de fonctionnement.
